# EUROPEAN PATENT SPECIFICATION

(11) **EP 0 342 994 B1**
(45) Date of publication and mention of the grant of the patent: **05.01.1994**
(21) Application number: 89305075.7
(22) Date of filing: 19.05.1989
(51) Int. Cl.: F16D 13/75

(54) **An engine clutch control mehanism**
Betätigungsvorrichtung für eine Motorkupplung
Mécanisme de commande pour embrayage de moteur

(30) Priority: 20.05.1988 GB 8812011
(43) Date of publication of application: 23.11.1989
(73) Proprietor: HOYLE, Edgar, Faversham Kent ME13 9BH (GB)
(72) Inventor: Hoyle, Edgar, Faversham Kent, ME13 9BH (GB); Robinson, Michael, Gorseinon West Glamorgan (GB)
(74) Representative: Jones, Graham H.

(56) References cited:
- EP-A- 0 213 857
- WO-A-85/03113
- WO-A-86/05849
- GB-A- 2 168 123

## Description

This invention relates to an engine clutch control mechanism.

In my European patent No. 0167612 there is disclosed an engine clutch control mechanism comprising a clutch control cable and self-adjustment means for the clutch control cable. The clutch control cable comprises a flexible movement-transmitting inner member which is positioned within a flexible conduit. The self-adjustment means comprises a conduit anchoring device, biasing means for providing a tension in the inner member, and a slip coupling. The slip coupling acts on the outside of the conduit and the slip coupling engages the conduit at different positions along the length of the conduit. This enables variations in the length of the inner cable due to clutch wear to be accommodated.

I have now discovered another way of constructing the slip coupling so that the slip coupling is of a neater and more compact design than disclosed in my European patent No. 0167612.

Accordingly, this invention provides an engine clutch control mechanism comprising a clutch control cable and self-adjustment means for the clutch control cable:
the clutch control cable comprising a flexible movement-transmitting inner member which is positioned within a flexible conduit;
the self-adjustment means comprising (i) a conduit anchoring device which is movable from a first position in which it does not anchor the conduit to a second position in which it anchors the conduit, (ii) biasing means for providing a tension in the inner member when the conduit anchoring device is in the first position in which it does not anchor the conduit, and (iii) a slip coupling,
and the engine clutch control mechanism being characterised in that the slip coupling is secured to the conduit, and characterised in that the slip coupling operates against a part of the conduit anchoring device.

The slip coupling arrangement of the present invention enables the engine clutch control mechanism to be produced in a particularly neat and compact form. The amount that the self-adjustment means is larger than the diameter of the clutch control cable can be reduced to a minimum and this is advantageous in positioning the self-adjustment means where desired along the length of the clutch control cable, and the possibility of the self-adjustment means snagging on parts of a vehicle to which the engine clutch control mechanism is fitted is reduced to a minimum.

Preferably, the part of the conduit anchoring device is a tube part.

Preferably, the slip coupling is secured to the conduit through an extension part of the conduit. The extension part of the conduit may be separately formed from the remainder of the conduit and it maybe an interference fit to the remainder of the conduit. The extension part of the conduit will usually have a larger diameter than the remainder of the conduit. The extension part of the conduit will usually not be provided with the projections.

The slip coupling may include a spring member.

Preferably, the tube part of the coupling anchoring device is formed as a separate tube part which is secured to the remainder of the conduit anchoring device and which extends inwardly from an end of the conduit anchoring device remote from the said at least one tooth.

There may be an annular gap between the separate tube part and the remainder of the conduit anchoring device.

The engine clutch control mechanism may include stop means for causing the conduit anchoring device to be in contact with an end wall of a housing of the self-adjustment means at the end of each clutch engaging stroke.

The stop means is preferably a slip coupling stop means. The slip coupling stop means preferably acts on the inner member of the clutch control cable. The slip coupling stop means preferably includes a spring member. The yielding load of the slip coupling stop means should be greater than the yielding load of the slip coupling which is secured to the conduit.

Preferably, the conduit anchoring device comprises at least one tooth for engaging between projections on the outside of the conduit.

The present invention also extends to a vehicle clutch system comprising the engine clutch control mechanism, a clutch actuating member, and a clutch.

The clutch actuating member will usually be a foot pedal, for example any known clutch foot pedal in a vehicle. Similarly, the clutch may be any known and existing type of clutch.

An embodiment of the invention will now be described solely by way of example and with reference to the accompanying drawings in which:
Figure 1 shows an engine clutch control mechanism in accordance with the present invention; and
Figure 2 shows an engine clutch control mechanism of the type described and claimed in my European patent No, 0167612.

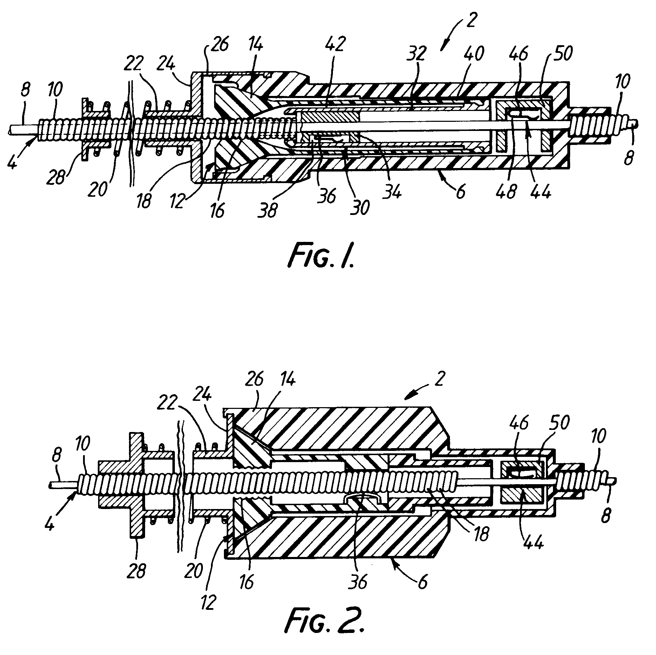

Referring to Figure 1, there is shown an engine clutch control mechanism 2 comprising a clutch control cable 4 and self-adjustment means 6 for the clutch control cable 4.

The clutch control cable 4 comprises a flexible movement-transmitting inner member 8 and a flexible conduit 10. As can be seen, the inner member 8 is positioned within the conduit 10 and the inner member 8 slides within the conduit 10.

The self-adjustment means 6 comprises a conduit anchoring device 12 which is movable from a first position in which it does not anchor the conduit 10 to a second position which is shown in Figure 1 and in which the conduit anchoring device 12 anchors the conduit 10. The conduit anchoring device 12 has a conical portion 14 which is provided with a plurality of teeth 16 for engaging between projections 18 on the outside of the conduit 10.

The self-adjustment means 6 further comprises biasing means in the form of a spring 20 for providing a tension in the inner member 8 when the conduit anchoring device 12 is in the first position in which it does not anchor the conduit 10. The spring 20 is a coil spring which fits at one end over a boss 22 extending from a wall 24 of a housing 26 of the self-adjustment means 6. The other end of the spring acts against a sleeve member 28 which is secured to the conduit 10 as shown.

The self-adjustment means further comprises a slip coupling 30. The slip coupling 30 is secured to the conduit 10. The slip coupling 30 operates in a tube part 32 of the conduit anchoring device 12. More specifically, the slip coupling 30 is secured to the conduit 10 through an extension part 34 of the conduit 10. The extension part 34 of the conduit 10 is separately formed from the remainder of the conduit 10 and it is an interference fit to the remainder of the conduit 10. Thus the extension part 34 may have a reduced diameter portion (not shown) which pushes inside the part of the conduit 10 having the projections 18. As can be seen from Figure 1, the extension part 34 of the conduit 10 has a larger diameter than the remainder of the conduit 10. As can also be seen from Figure 1, the extension part 34 of the conduit 10 does not have the projections 18.

The slip coupling 30 includes a spring member 36 which is bent as shown to have one straight leg and one cranked leg as shown. The spring member 36 fits in a recess 38 formed in the extension part 34.

The tube part 32 of the conduit anchoring device 12 is formed as a separate tube part which is secured to a tubular extension portion 40 of the conduit anchoring device 12. The tubular extension portion 40 extends from the conical portion 14 and is formed as an integral part of the conical portion 14. Thus, the extension part 34 extends inwardly from the end of the conduit anchoring device 12 remote from the conical portion 14 which is provided with the teeth 16. There is an annular gap 42 between the tube part 32 and the tubular extension portion 40.

The engine clutch control mechanism 2 includes stop means in the form of a slip coupling stop means 44. The slip coupling stop means 44 is for causing the conduit anchoring device 12 to be in contact with the end wall 24 of the housing 26 at the end of each clutch engaging stroke. Such repositioning of the conduit anchoring device 12 against the end wall 24 may not always be necessary in that the conduit anchoring device 12 may sometimes in any event be so positioned against the end wall 24.

As can be seen from Figure 1, the slip coupling stop means 44 includes a spring member 46 which is shaped like the spring member 36. The spring member 46 is contained within a recess 48 in a retainer member 50. The spring member 46 acts on the inner member 8 of the clutch control cable 4.

Referring now to Figure 2, there is shown an engine clutch control mechanism 2 of the type described and claimed in my European patent No. 0167612. Similar parts as in Figure 1 have been given the same reference numerals and their precise construction and operation will not again be given. Although Figures 1 and 2 are not shown to scale, it is to be understood that the self-adjustment means 6 shown in Figure 1 is neater and of a more compact design than the self-adjustment means 6 shown in Figure 2. This facilitates the connection of the self-adjustment means 6 at various desired positions along the clutch control cable 4. For convenience of illustration, the self-adjustment means 6 shown in Figure 2 is shown as provided with the slip coupling stop means 44.

It is to be appreciated that the embodiment of the invention described above with reference to Figure 1 has been given by way of example only and that modifications may be effected. Thus, for example, the conduit 10 may be made of one or more wires. Where more than one wire is employed, the wires are preferably interwound. The conical portion 14 shown in Figure 1 may be more of a frusto-conical shape as shown in Figure 2. Other types of slip couplings than the illustrated slip coupling including the springs 36 and 46 may be employed. More or less teeth 16 can be utilised, it being appreciated that the teeth 16 engage the projections 18 during use of the engine clutch control mechanism 2 so that the conduit anchoring device 12 is able to grip the conduit 10 at appropriate positions along the conduit 10 to accommodate changes of length in the inner member 8, for example due to clutch wear and/or stretching of the inner member 8. Although the self-adjustment means 6 is shown in Figures 1 and 2 as positioned in a middle part of the clutch control cable 4, if desired the self-adjustment means 6 may be positioned at an end of the conduit 10 of the clutch control cable 4. The conduit 10 may have different types of projections 18.

The engine clutch control mechanism 2 may be fitted to any desired and suitable vehicles, Thus, the vehicle may be a car, van, lorry, coach or a bus. The invention also extends to a vehicle when provided with the engine clutch control mechanism.

## Claims

1. An engine clutch control mechanism (2) comprising a clutch control cable (4) and self-adjustment means (6) for the clutch control cable (4):
the clutch control cable (4) comprising a flexible movement-transmitting inner member (8) which is positioned within a flexible conduit (10);
the self-adjustment means (6) comprising (i) a conduit anchoring device (12) which is movable from a first position in which it does not anchor the conduit (10) to a second position in which it anchors the conduit (10), (ii) biasing means (20) for providing a tension in the inner member (8) when the conduit anchoring device (12) is in the first position, and (iii) a slip coupling (30),
characterised in that the slip coupling (30) is secured to the conduit (10), and operates against a part (32) of the conduit anchoring device (12).

2. An engine clutch control mechanism according to claim 1 characterised in that the part (32) of the conduit anchoring device (12) is a tube part (32).

3. An engine clutch control mechanism according to claim 1 or claim 2 characterised in that the slip coupling (30) is secured to the conduit (10) through an extension part (34) of the conduit (10).

4. An engine clutch control mechanism according to claim 3 characterised in that the extension part (34) of the conduit (10) is separately formed from the remainder of the conduit (10) and is an interference fit to the remainder of the conduit (10).

5. An engine clutch control mechanism according to any one of the preceding claims characterised in that the slip coupling (30) includes a spring member (36).

6. An engine clutch control mechanism according to any one of the preceding claims characterised in that the tube part (32) of the conduit anchoring device (12) is formed as a separate tube part (32) which is secured to the remainder of the conduit anchoring device (12) and which extends inwardly from an end of the conduit anchoring device (12) remote from the said at least one tooth (16).

7. An engine clutch control mechanism according to claim 6 characterised in that there is an annular gap (42) between the separate tube part (32) and the remainder of the conduit anchoring device (12).

8. An engine clutch control mechanism according to any one of the preceding claims and characterised by including stop means (44) for causing the conduit anchoring device (12) to be in contact with an end wall (24) of a housing (26) of the self-adjustment means (6) at the end of each clutch engaging stroke.

9. An engine clutch control mechanism according to claim 8 characterised in that the stop means (44) is a slip coupling stop means (44) which acts on the inner member (8) of the clutch control cable (4).

10. An engine clutch control mechanism according to any one of the preceding claims characterised in that the conduit anchoring device (12) comprises at least one tooth (16) for engaging between projections (18) on the outside of the conduit (10).

11. A vehicle clutch system comprising an engine clutch control mechanism (2) according to any one of the preceding claims, a clutch actuating member, and a clutch.

## Patentansprüche

1. Betätigungsvorrichtung für eine Motorkupplung (2) mit einem Kupplungsbetätigungsseil (4) und einer Selbstjustier-Einrichtung (6) für das Kupplungsbetätigungsseil (4):
wobei das Kupplungsbetätigungsseil (4) ein biegsames bewegungs-übertragendes inneres Teil (8), das innerhalb einer biegsamen Führungshülse (10) angeordnet ist, aufweist;
wobei die Selbstjustier-Einrichtung (6) aufweist (i) eine Führungshülsenverankerungseinrichtung (12), die aus einer ersten Stellung, in der sie die Führungshülse (10) nicht verankert, in eine zweite Stellung, in der sie die Führungshülse (10) verankert, beweglich ist, (ii) eine Vorspannungseinrichtung (20), um eine Spannung in dem inneren Teil (8) zu schaffen, wenn die Führungshülsenverankerungseinrichtung (12) in der ersten Stellung ist, und (iii) eine Rutschverbindung (30),
dadurch gekennzeichnet, daß die Rutschverbindung (30) an der Führungshülse (10) befestigt ist, und gegen ein Teilstück (32) der Führungshülsenverankerungseinrichtung (12) wirkt.

2. Betätigungsvorrichtung für eine Motorkupplung nach Anspruch 1, dadurch gekennzeichnet, daß das Teilstück (32) der Führungshülsenverankerungseinrichtung (12) ein röhrenförmiges Teilstück (32) ist.

3. Betätigungsvorrichtung für eine Motorkupplung nach Anspruch 1 oder Anspruch 2, dadurch gekennzeichnet, daß die Rutschverbindung (30) an der Führungshülse (10) durch einen Fortsatz (34) der Führungshülse (10) befestigt ist.

4. Betätigungsvorrichtung für eine Motorkupplung nach Anspruch 3, dadurch gekennzeichnet, daß der Fortsatz (34) der Führungshülse (10) vom Rest der Führungshülse (10) getrennt ausgebildet ist und am Rest der Führungshülse (10) mit Festsitz befestigt ist.

5. Betätigungsvorrichtung für eine Motorkupplung nach einem der vorhergehenden Ansprüche, dadurch gekennzeichnet, daß die Rutschverbindung (30) ein federndes Teil (36) aufweist.

6. Betätigungsvorrichtung für eine Motorkupplung nach einem der vorhergehenden Ansprüche, dadurch gekennzeichnet, daß das röhrenförmige Teilstück (32) der Führungshülsenverankerungseinrichtung (12) als ein gesondertes röhrenförmiges Teilstück (32), das am Rest der Führungshülsenverankerungseinrichtung (12) befestigt ist und das sich von einem Ende der Führungshülsenverankerungseinrichtung (12) entfernt von besagtem mindestens einen Zahn (16) nach innen erstreckt, ausgebildet ist.

7. Betätigungsvorrichtung für eine Motorkupplung nach Anspruch 6, dadurch gekennzeichnet, daß ein ringförmiger Spalt (42) zwischen dem gesonderten röhrenförmigen Teilstück (32) und dem Rest der Führungshülsenverankerungseinrichtung (12) vorliegt.

8. Betätigungsvorrichtung für eine Motorkupplung nach einem der vorhergehenden Ansprüche, gekennzeichnet durch eine Stoppeinrichtung (44), um zu veranlassen, daß die Führungshülsenverankerungseinrichtung (12) mit einer Endwand (24) eines Gehäuses (26) der Selbstjustier-Einrichtung (6) am Ende jedes Kupplungseingriffshubes in Berührung ist.

9. Betätigungsvorrichtung für eine Motorkupplung nach Anspruch 8, dadurch gekennzeichnet, daß die Stoppeinrichtung (44) eine Rutschverbindungsstoppeinrichtung (44), die auf das innere Teil (8) des Kupplungsbetätigungsseiles (4) wirkt, ist.

10. Betätigungsvorrichtung für eine Motorkupplung nach einem der vorhergehenden Ansprüche, dadurch gekennzeichnet, daß die Führungshülsenverankerungseinrichtung (12) mindestens einen Zahn (16) zum Eingriff zwischen Vorsprüngen (18) an der Außenseite der Führungshülse (10) aufweist.

11. Ein Fahrzeugkupplungssystem, das eine Betätigungsvorrichtung für eine Motorkupplung (2) gemäß einem der vorhergehenden Ansprüche, ein Kupplungsbetätigungsglied und eine Kupplung aufweist.

## Revendications

1. Mécanisme (2) de commande d'un embrayage de moteur, comprenant un câble (4) de commande d'embrayage et des moyens (6) de réglage automatique pour le câble (4) de commande d'embrayage :
le câble (4) de commande d'embrayage comprenant un élément flexible interne (8) de transmission de mouvement qui est positionné dans une conduite flexible (10),
des moyens de réglage automatique (6) comprenant (i) un dispositif de fixation de conduite (12) qui est mobile entre une première position dans laquelle il ne fixe pas la conduite (10) et une seconde position dans laquelle il fixe la conduite (10), (ii) des moyens de rappel (20) pour fournir une tension à l'élément interne (8) lorsque le dispositif (12) de fixation de conduite est dans la première position et (iii) un accouplement à glissement (30),
caractérisé en ce que l'accouplement à glissement (30) est fixé à la conduite (10) et agit contre une partie (32) du dispositif de fixation de conduite (12).

2. Mécanisme de commande d'un embrayage de moteur suivant la revendication 1, caractérisé en ce que la partie (32) du dispositif de fixation de conduite (12) est un élément tubulaire (32).

3. Mécanisme de commande d'un embrayage de moteur suivant la revendication 1 ou la revendication 2, caractérisé en ce que l'accouplement à glissement (30) est fixé à la conduite (10) par un élément d'extension (34) de la conduite (10).

4. Mécanisme de commande d'un embrayage de moteur suivant la revendication 3, caractérisé en ce que l'élément d'extension (34) de la conduite (10) est formé séparément du reste de la conduite (10) et est dans un ajustage à tolérance négative avec le reste de la conduite (10).

5. Mécanisme de commande d'un embrayage de moteur suivant l'une quelconque des revendications précédentes, caractérisé en ce que l'accouplement à glissement (30) comporte un élément de ressort (36).

6. Mécanisme de commande d'un embrayage de moteur suivant l'une quelconque des revendications précédentes, caractérisé en ce que l'élément tubulaire (32) du dispositif de fixation de conduite (12) est façonné en tant qu'élément tubulaire séparé (32) qui est fixé au reste du dispositif de fixation de conduite (12) et qui s'étend vers l'intérieur depuis une extrémité du dispositif de fixation de conduite (12) à distance d'au moins une dent (16).

7. Mécanisme de commande d'un embrayage de moteur suivant la revendication 6, caractérisé en ce qu'il y a un interstice annulaire (42) entre l'élément tubulaire séparé (32) et le reste du dispositif de fixation de conduite (12).

8. Mécanisme de commande d'un embrayage de moteur suivant l'une quelconque des revendications précédentes, caractérisé en ce qu'il comporte des moyens d'arrêt (44) pour mettre en contact le dispositif de fixation de conduite (12) et une paroi d'extrémité (24) d'un boîtier (26) des moyens de réglage automatique (6) à la fin de chaque course de mise en prise de l'embrayage.

9. Mécanisme de commande d'un embrayage de moteur suivant la revendication 8, caractérisé en ce que les moyens d'arrêt (44) consistent en des moyens d'arrêt d'accouplement à glissement (44) qui agissent sur l'élément interne (8) du câble de commande d'embrayage (4).

10. Mécanisme de commande d'un embrayage de moteur suivant l'une quelconque des revendications précédentes, caractérisé en ce que le dispositif de fixation de conduite (12) comporte au moins une dent (16) pour entrer en prise entre des saillies (18) sur le côté externe de la conduite (10).

11. Système d'embrayage de véhicule comprenant un mécanisme de commande d'un embrayage de moteur (2) suivant l'une quelconque des revendications précédentes, un élément d'actionnement d'embrayage et un embrayage.
